# EUROPEAN PATENT SPECIFICATION

(11) **EP 0 607 618 B1**
(45) Date of publication and mention of the grant of the patent: **29.04.1998**
(21) Application number: 93121059.5
(22) Date of filing: 29.12.1993
(51) Int. Cl.: C06D 5/06, C06B 35/00

(54) **Gas generator for vehicle occupant restraint**
Gasgenerator für ein Fahrzeug-Insassenrückhaltesystem
Générateur de gaz pour système de retenue d'un occupant de véhicule

(30) Priority: 21.01.1993 US 6817
(43) Date of publication of application: 27.07.1994
(73) Proprietor: TRW INC., Lyndhurst Ohio 44124 (US)
(72) Inventor: Barcaskey, Eric S., Phoenix, Arizona 85044 (US)
(74) Representative: Wagner, Karl H., Dipl.-Ing.

(56) References cited:
- EP-A- 0 012 628
- WO-A-92/18443
- DE-C- 3 935 869
- FR-A- 2 254 618
- FR-A- 2 292 687
- E.H. ERICH PIETSCH 'Gmelins Handbuch Der Anorganischen Chemie, Lithium, Ergänzungsband' 1960 , VERLAG CHEMIE, GMBH , WEINHEIM, GERMANY * page 273 - page 276 *
- R.W. CAHN ET AL. 'Concise Encyclopedia of Advanced Ceramic Materials' 1991 , PERGAMON PRESS , OXFORD, GB * page 319 - page 322 *

## Description

### Background of the Invention

### Technical Field

The present invention relates to a gas generator for a vehicle occupant restraint, such as an air bag, and to a gas generating composition which is used in the gas generator.

### Description of the Prior Art

A large number of gas generating compositions have been proposed for generating gas to operate vehicle occupant restraints, such as air bags and pretensioners for seat belts. For air bags, in particular, compositions which produce an inert gas, such as nitrogen, have been preferred.

Excellent results have been achieved with a solid nitrogen generating composition which comprises an alkali metal azide fuel and a metal oxidant for the fuel. Compositions comprising these materials produce, on combustion, a nitrogen gas along with other products of reaction.

The solid nitrogen generating compositions are contained within a gas generator apparatus. The size and weight of the gas generator apparatus is dependent to a large extent on the amount of gas generating material. To generate enough gas to inflate an air bag, a substantial amount of nitrogen generating composition is required. The gas generator apparatus, particularly for a driver's side air bag, must be small and light weight, so as to be adapted to fit within the vehicle steering wheel. If the amount of nitrogen generating composition can be reduced without significantly affecting the performance of the gas generator apparatus, the size and weight of the gas generator apparatus can be reduced proportionately.

U.S. Patent No. 3,741,585 discloses a gas generating composition for inflating a vehicle crash bag. The composition comprises a metal aside and an oxidizing agent. Lithium azide (LiN₃) is listed as one suitable metal azide. However, no reactions are disclosed which use this ingredient. The oxidizing agent can be a metal oxide, a metal sulfide or sulfur, a metal or organic iodide, or an organic chloride. Examples of metal oxides given in the patent are molybdenum trioxide, tungsten trioxide, lead dioxide, and vanadium pentoxide. The composition can contain 1-75 weight percent of an oxidizing agent. However, preferred compositions comprise 30 to 75 weight percent of a metal azide; e.g., 30 to 75 weight percent of sodium azide.

U.S. Patent No. 3,895,098 discloses a gas generating composition for a vehicle occupant restraint system. The composition comprises an alkali metal azide and a metal oxide. The patent lists lithium azide as one suitable alkali metal azide. The patent calls for a slight excess of metal oxide to prevent, on combustion, the formation of alkali metal. The alkali metal, if formed, can burn spontaneously upon contact with air, and present a fire hazard. Also, an alkali metal residue can react with moisture to produce hydrogen, which is an undesirable by-product.

U.S. Patent No. 3,931,040 also discloses the combustion of an alkali metal azide and a metal oxide to produce a nitrogen containing gas. A number of reactions involving different azides and different oxides are disclosed. One reaction equation disclosed in the patent uses lithium azide. The lithium azide is reacted with a stoichiometric amount of titanium dioxide. This reaction would be impractical for the reason advanced in the '098 patent. Specifically, without an excess of metal oxide, an alkali metal residue could form, presenting a fire hazard.

U.S. Patent No. 4,758,287 is yet another patent that discloses the reaction of a alkali metal azide with a metal oxide. This patent is directed primarily to a method for preparing porous propellant grains. No reaction equation is disclosed in the patent involving the use of lithium azide. The patent discloses and claims the use of a stoichiometric excess of metal oxide to prevent the formation of alkali metals.

FR-A-2292687 discloses gas generating compositions comprising an alkali metal oxide and a metal oxide, wherein the metal oxide is present in an amount at least equal to 90 % of the amount required by stoichiometry with respect to the alkali metal azide.

### Summary of the Invention

The present invention resides in a vehicle occupant restraint assembly. The assembly comprises a vehicle occupant restraint, a housing, a gas generating composition within the housing, an igniter for igniting the gas generating composition, and gas flow means for directing gas into the vehicle occupant restraint. In a preferred embodiment of the present invention, the vehicle occupant restraint is an air bag.

The gas generating composition comprises lithium azide (LiN₃) and a metal oxidant (MeY), wherein Y can be either oxygen or sulfur. The metal oxidant is present in the gas generating composition in a sub-stoichiometric amount with regard to the lithium azide. The mol ratio of the lithium azide to the metal oxidant is that by which, on combustion of the gas generating composition, excess lithium in the combustion product reacts with nitrogen to form lithium nitride (Li₃N).

The vehicle occupant restraint assembly comprises a cooling surface to cool the combustion products. The amount of cooling surface preferably is an effective amount to cool the combustion products to a temperature below the melting point of the lithium nitride, preferably below about 850°C.

A preferred metal oxidant is iron oxide (Fe₂0₃). A preferred mol ratio of lithium azide to iron oxide in the gas generating composition of the present invention is more than about 7:1.

The present invention also resides in a gas generating composition for a vehicle occupant restraint comprising active components consisting essentially of lithium azide (LiN₃) and a metal oxidant (MeY), wherein Y can be either oxygen or sulfur. The metal oxidant is present in the gas generating composition, with the lithium azide, in a sub-stoichiometric amount, the lithium azide and metal oxidant on combustion producing lithium nitride (Li₃N).

More preferably, the gas generating composition of the present invention comprises active components consisting essentially of lithium aside and a metal oxidant in a mol ratio effective to react according to the following equation: ${\text{zLiN}}_{\text{3}} \text{+} {\text{Me}}_{\text{x}} {\text{Y}}_{\text{y}} \text{→} \frac{\text{3} \text{z} \text{- 1}}{\text{2}} {\text{N}}_{\text{2}} \text{+} {\text{yLi}}_{\text{2}} \text{Y} \text{+} \frac{\text{z} \text{- 2} \text{y}}{\text{3}} {\text{Li}}_{\text{3}} \text{N} \text{+} \text{xMe}$wherein Y is either oxygen or sulfur.

Preferably, z equals approximately 3 plus 2y.

### Brief Description of the Drawings

Further features of the present invention will become apparent to those skilled in the art to which the present invention relates, from consideration of the following specification with reference to the accompanying drawings, in which:
Fig. 1 is a schematic illustration of a vehicle occupant restraint assembly according to the present invention.
Fig 2 is a graph plotting mols of reaction products formed from the combustion of a gas generating composition containing lithium aside and iron oxide (Fe₂0₃) against percent lithium aside in the composition; and
Fig 3. is a graph plotting chamber and exhaust flame temperatures from the combustion of the gas generating compositions of Fig. 2 against percent lithium azide in the composition.

### Description of a Preferred Embodiment

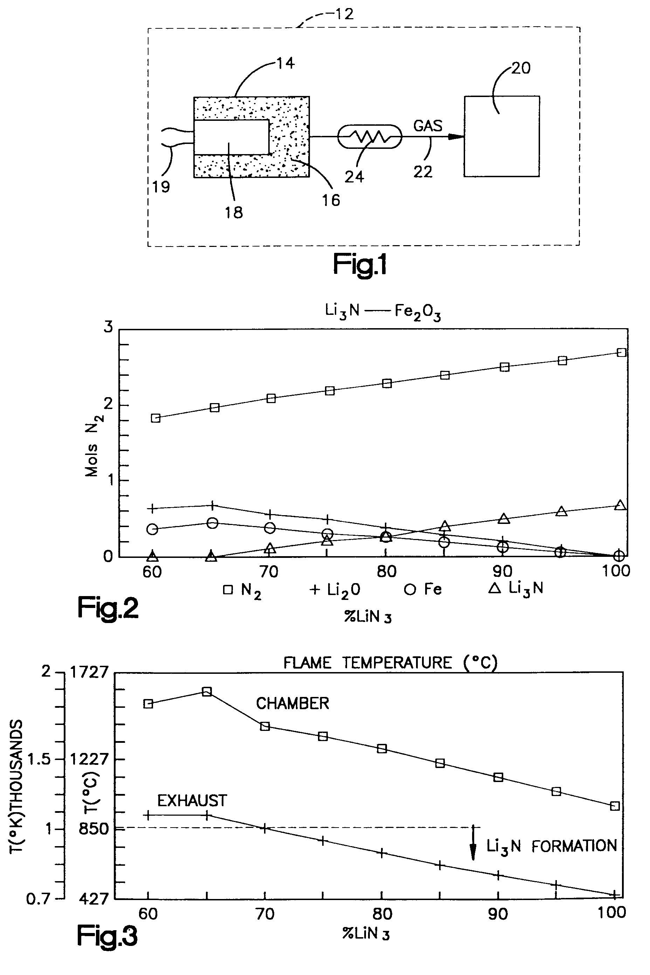

Referring to Fig. 1, the vehicle occupant restraint assembly 12 of the present invention comprises a housing 14. The housing 14 contains a gas generating composition 16. The gas generating composition 16 is ignited by an igniter 18 operatively associated with the gas generating composition 16. Electrical leads 19 convey current to the igniter 18 from an electric circuit that includes a power source and a sensor which is responsive to an event such as a vehicle collision. The assembly 12 also comprises a vehicle occupant restraint 20. A gas flow means 22 conveys gas, which is generated by combustion of the gas generating composition 16 within housing 14, to the vehicle occupant restraint 20. The gas flow means 22 comprises cooling surfaces 24, for example, a plurality of mesh screens, to cool the gas. In addition to mesh screens, the cooling surfaces 24 can comprise filter surfaces for filtering particulate from the gas flow. Such filter surfaces function to cool the gas flow, as well as filter the gas flow.

A preferred vehicle occupant restraint is an air bag which is inflatable to restrain a vehicle occupant in the event of a collision. Other occupant restraints which can be used in the present invention are inflatable seat belts and seat belt pretensioners.

The present invention is not limited to a vehicle occupant restraint assembly of any particular configuration. One configuration suitable for use with the gas generating composition of the present invention is disclosed in U.S. Patent No. 4,902,036 to Zander et al. The assembly disclosed in this patent comprises means for positioning an air bag between an occupant of a vehicle and an interior portion of the vehicle, to protect the occupant from an impact with the interior portion of the vehicle, in the event of a collision involving the vehicle. The assembly can be installed in the steering wheel of the vehicle. A gas generator, including a housing, produces a sufficient quantity of gaseous combustion products to inflate the air bag. The housing has an igniter which is positioned axially within the housing. A gas generating composition is arranged in a doughnut-shaped configuration around the igniter. Upon ignition of the igniter, reaction products from the igniter ignite the gas generating composition.

The igniter 18 of the present invention can be the same as the igniter shown in the Zander et al. Patent No. 4,902,036. This igniter comprises a squib containing a small charge of an ignitable combustible material. Electric leads convey a current to the squib. The current generates heat which ignites the small charge of ignitable material. The current is provided when the sensor responsive to an event such as a vehicle collision closes an electrical circuit that includes a power source. The igniter also has a canister containing a rapidly combustible material such as boron potassium nitrate. The rapidly combustible material is ignited by the small charge of ignitable material. Ignition of the rapidly combustible material provides the threshold energy required to ignite the gas generating composition. Other well known ignition systems capable of producing this threshold energy can also be used.

The gas generating composition 16 within the housing 14 can be in the form of a grain of any desired configuration. The gas generating composition comprises, as the major active ingredients of the composition, lithium azide (LiN₃) and a metal oxidant (MeY), wherein Y is either oxygen or sulfur. The metal oxidant is present in the gas generating composition in a sub-stoichiometric amount with regard to the lithium azide. Thus, the gas generating composition of the present invention is fuel-rich.

A preferred metal oxidant (MeY) is iron oxide (Fe₂O₃). However, the metal oxidant can be any of a number of other oxides or sulfides used for the combustion of alkali metal azides.

Preferred are the transition metal oxides, boron oxide (B₂0₃), aluminum oxide (Al₂0₃), silicon oxide (SiO₂), and sulfur counterparts of these oxides. Examples of suitable transition metal oxides are ferrous oxide (Fe₃0₄), copper oxide (CuO), titanium dioxide (TiO₂), nickel oxide (NiO) zinc oxide (ZnO), manganese oxide (MnO₂) vanadium pentoxide (V₂0₅), molybdenum trioxide (MoO₃), zirconium oxide (ZrO₂), tungsten trioxide (WO₃), and the sulfur counterparts of these oxides. Mixtures of metal oxides and sulfides can also be used.

The lithium azide is an energetic material. On ignition, the lithium azide reacts with the metal oxidant, when in a fuel rich ratio, to produce nitrogen, lithium oxide, lithium nitride (Li₃N), and elemental metal (of the metal oxidant) in accordance with the following equation: ${\text{zLiN}}_{\text{3}} \text{+} {\text{Me}}_{\text{x}} {\text{Y}}_{\text{y}} \text{→} \frac{\text{3} \text{z} \text{- 1}}{\text{2}} {\text{N}}_{\text{2}} \text{+} {\text{yLi}}_{\text{2}} \text{Y} \text{+} \frac{\text{z} \text{- 2} \text{y}}{\text{3}} {\text{Li}}_{\text{3}} \text{N} \text{+} \text{xMe}$wherein Y is either oxygen or sulfur.

Preferably, z equals approximately 3 plus 2y.

The following Table 1 gives representative reactions that take place with representative metal oxides and lithium azide according to the present invention.

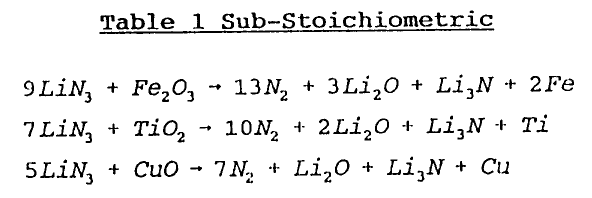

The following Table 2 gives comparative reactions that occur with the use of stoichiometric amounts of a metal oxide and lithium azide:

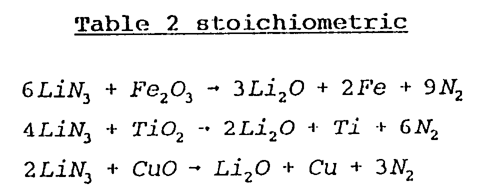

It can be seen comparing Tables 1 and 2 that with essentially the same amounts of gas generating material, substantially greater amounts of nitrogen are produced when the ratio of metal oxide to azide is sub-stoichiometric. For instance, with iron oxide, the comparison is 13 mols of nitrogen, in Table 1, compared to 9 mols in Table 2. With titanium dioxide, the comparison is 10 mols against 6, and with copper oxide, the comparison is 7 mols against 3.

In a gas generator apparatus, the weight and volume of the apparatus is almost proportional to the weight and volume of the gas generating composition which is used. Generating more gas per volume of gas generating composition permits a reduction in the amount of the gas generating composition required. Reducing the amount of gas generating composition, in turn, substantially reduces the weight and volume of the gas generating apparatus itself.

In the above reactions of Table 1, it should be noted that only some of the mols of lithium in the gas generating composition are oxidized. In the reaction with iron oxide, in Table 1, one mol of nitrogen combines with three mols of lithium to produce lithium nitride. This reaction is necessary to prevent the formation of lithium metal from the combustion reaction.

To obtain lithium nitride as a reaction product, the amount of cooling surface 24 provided in the vehicle occupant restraint assembly 12 of the present invention is preferably sufficient to cool the flame temperature of the reactants to below the melting point of lithium nitride, preferably to less than about 850°C.

The weight ratio of the metal oxidant to lithium azide in the gas generating compositions of the present invention can be any ratio effective to produce lithium nitride as one of the reaction products, or to avoid the formation of elemental lithium. Fig. 2 is a graph plotting mols of reaction products produced against mol percents of lithium azide in a gas generating composition containing iron oxide. The data of Fig. 2 is calculated data. At 60 mol percent lithium azide, the mol ratio is stoichiometric. The square data points represent mols of nitrogen produced. It can be seen from Fig. 2 that any increase in mol percent lithium azide, above the stoichiometric ratio of 60%, increases the amount of nitrogen gas produced, and thus meets this objective of the present invention, namely greater nitrogen production. However, Fig. 2 also shows using the triangle data points, the mols of lithium nitride (Li₃N) produced. As can be seen, this reaction product is not formed until the mol ratio is above about 6.5:1.

Referring to Fig. 3, which plots the mol percent of lithium azide in the gas generating compositions of Fig. 1 against temperatures, it will be seen that a preferred mol ratio is at least about 7:1. In other words, at least about 70 mol percent is lithium azide. Fig. 3 has two curves, a chamber temperature curve and an exhaust temperature curve. The data for both curves is calculated data. The data for the chamber temperature curve was calculated for a chamber pressure of 6.89 ∗ 10⁶ Pa (1000 psi); the data for the exhaust temperature curve, for an exhaust pressure of one atmosphere. Fig. 3 also has a horizontal line at about 850°C which represents the melting point of lithium nitride. Fig. 3 shows that as the mol percent of lithium azide is increased, above about 65 mol percent, the flame temperature decreases. However, even the exhaust temperature remains above the melting point temperature for lithium azide up to about 70 mol percent azide. As indicated above, it is desirable to cool the products of combustion to a temperature below the melting point of lithium nitride to promote the formation of lithium nitride.

Although the data of Figs. 2 and 3 is for compositions containing iron oxide, the same relationships of reactants and products of combustion exist where other metal oxidants are used. Based on this and the data of Figs. 2 and 3, it has been determined that the metal oxide should be sub-stoichiometric by an amount of at least about 15 mol percent; that is, there should be at least about 15 mol percent excess azide, preferably, about 20 to about 75 mol percent excess azide. The excess mol percent can be calculated as:$\frac{\text{mols azide in composition - stoichiometric mols of azide}}{\text{stoichiometric mols of azide}}$

When the metal oxide is iron oxide (Fe₂O₃), preferably about 20-50 excess mol percent lithium azide is used in the gas generating composition.

## Claims

1. A vehicle occupant restraint assembly comprising:
a vehicle occupant restraint;
a housing;
a gas generating composition within the housing; an igniter for igniting the gas generating composition; and
gas flow means for directing gas from said housing to said vehicle occupant restraint;
said gas generating composition comprising lithium azide and a metal oxidant (MeY) wherein Y is either oxygen or sulfur,
wherein the metal oxidant is present in a sub-stoichiometric amount of at least about 15 mol percent excess lithium azide, the ratio of lithium azide to metal oxidant being a ratio effective to produce lithium nitride (Li₃N),
whereby in case of metal oxides the stoichiometric reaction is defined as the complete conversion of the lithium of the lithium azide into lithium oxide.

2. The restraint assembly of claim 1 wherein the gas generating composition burns according to the following equation: ${\text{zLiN}}_{\text{3}} \text{+} {\text{Me}}_{\text{x}} {\text{Y}}_{\text{y}} \text{→} \frac{\text{3} \text{z} \text{-1}}{\text{2}} {\text{N}}_{\text{2}} \text{+} {\text{yLi}}_{\text{2}} \text{Y} \text{+} \frac{\text{z} \text{-2} \text{y}}{\text{3}} {\text{Li}}_{\text{3}} \text{N} \text{+} \text{xMe}$wherein Y is either oxygen or sulfur.

3. The restraint assembly of claim 2 wherein z equals approximately 3 plus 2y.

4. The restraint assembly of claim 1 comprising cooling surfaces effective to cool the products of combustion of the gas generating composition to below the melting point of lithium nitride, preferably to below 850 °C.

5. The restraint assembly of claim 1 wherein the metal oxidant is an oxide or sulfide of a transition metal, or boron, aluminum, or silicon, or mixtures thereof, or, wherein said metal oxidant is iron oxide (Fe₂O₃) present in a sub-stiochiometric amount of about 20-50 mol percent excess lithium azide.

6. The restraint assembly of claim 5 having a cooling surface effective to cool the products of combustion of the gas generating composition to less than about 850 °C.

7. The restraint assembly of claim 1 wherein said gas generating composition consists essentially of lithium azide and iron oxide (Fe₂O₃) and wherein the lithium azide is present in an effective amount to, in reaction with the iron oxide, produce lithium nitride;
said restraint assembly further comprising heat exchange means in said gas flow means effective to cool the products of combustion of said gas generating composition to less than about 850 °C to produce lithium nitride solids; and
filter means to entrap the solids of lithium nitride and other solids in the combustion products.

8. A gas generating composition for inflating a vehicle occupant restraint comprising active ingredients consisting essentially of lithium azide and a metal oxidant,
wherein the metal oxidant is present in a sub-stoichiometric amount of at least about 15 mol percent excess lithium azide, wherein the lithium azide is present in an effective amount to, in reaction with the metal oxidant, produce an amount of lithium nitride (Li₃N),
whereby in case of the metal oxidant being metal oxides the stoichiometric reaction is defined as the complete conversion of the lithium of the lithium azide into lithium oxide.

9. The composition of claim 7 or 8 wherein said metal oxidant is selected from the group consisting of oxides or sulfides of a transition metal, of boron, of aluminum, of silicon, or of mixtures thereof, or, wherein said metal oxidant is iron oxide (Fe₂O₃) present in a sub-stoichiometric amount of about 20-50 mol percent excess lithium azide.

10. The composition of claim 8 wherein said lithium azide and a metal oxidant react essentially according to the equation: ${\text{zLiN}}_{\text{3}} \text{+} {\text{Me}}_{\text{x}} {\text{Y}}_{\text{y}} \text{→} \frac{\text{3} \text{z} \text{-1}}{\text{2}} {\text{N}}_{\text{2}} \text{+} {\text{yLi}}_{\text{2}} \text{Y} \text{+} \frac{\text{z} \text{-2} \text{y}}{\text{3}} {\text{Li}}_{\text{3}} \text{N} \text{+} \text{xMe}$wherein Y is either oxygen or sulfur.

11. The composition of claim 10 wherein z equals approximately 3 plus 2y.

12. The composition of claim 8 wherein said lithium azide and iron oxide (Fe₂O₃) react essentially according to the equation: $\text{9} {\text{LiN}}_{\text{3}} \text{+} {\text{Fe}}_{\text{2}} {\text{O}}_{\text{3}} \text{→ 13} {\text{N}}_{\text{2}} \text{+ 3} {\text{Li}}_{\text{2}} {\text{O + Li}}_{\text{3}} \text{N} \text{+ 2} \text{Fe} \text{.}$

## Patentansprüche

1. Fahrzeuginsassenrückhalteanordnung, die folgendes aufweist:
eine Fahrzeuginsassenrückhaltevorrichtung;
ein Gehäuse;
eine Gaserzeugungszusammensetzung innerhalb des Gehäuses;
einen Zünder zum Zünden der Gaserzeugungszusammensetzung und
Gasströmungsmittel zum Leiten des Gases von dem Gehäuse zu der Fahrzeuginsassenrückhaltevorrichtung;
wobei die Gaserzeugungszusammensetzung Lithiumazid und ein Metalloxidationsmittel (MeY) aufweist, wobei Y entweder Sauerstoff oder Schwefel ist, wobei das Metalloxidationsmittel in einer Menge unterhalb der stöchiometrischen Menge vorhanden ist, und zwar mit mindestens ungefähr 15 Mol Prozent Überschuß an Lithiumazid, wobei das Verhältnis von Lithiumazid zu Metalloxidationsmittel ein Verhältnis ist, das zur Erzeugung von Lithiumnitrid (Li₃N) effektiv ist, wodurch im Falle der Metalloxide die stöchiometrische Reaktion als die vollständige Umwandlung des Lithiums des Lithiumazids in Lithiumoxid definiert ist.

2. Rückhalteanordnung nach Anspruch 1, wobei die Gaserzeugungszusammensetzung gemäß der folgenden Gleichung verbrennt: ${\text{zLiN}}_{\text{3}} \text{+} {\text{Me}}_{\text{x}} {\text{Y}}_{\text{y}} \text{→} \frac{\text{3} \text{z} \text{-1}}{\text{2}} {\text{N}}_{\text{2}} \text{+} {\text{yLi}}_{\text{2}} \text{Y} \text{+} \frac{\text{z} \text{-2} \text{y}}{\text{3}} {\text{Li}}_{\text{3}} \text{N} \text{+} \text{xMe}$wobei Y entweder Sauerstoff oder Schwefel ist.

3. Rückhalteanordnung nach Anspruch 2, wobei z gleich annähernd 3 plus 2y ist.

4. Rückhalteanordnung nach Anspruch 1, wobei Kühloberflächen vorgesehen sind, die effektiv sind, um die Verbrennungsprodukte der Gaserzeugungszusammensetzung auf unterhalb des Schmelzpunkt des Lithiumnitrids vorzugsweise auf unter 850 °C abzukühlen.

5. Rückhalteanordnung nach Anspruch 1, wobei das Metalloxidationsmittel ein Oxid oder ein Sulfid von einem Übergangsmetall, von Bor, von Aluminium, von Silizium oder von Mischungen daraus ist, oder wobei das Metalloxidationsmittel Eisenoxid (Fe₂O₃) ist, und zwar vorhanden bei einer sub-stöchiometrischen Menge von ungefähr 20 - 50 Mol Prozent Überschuß an Lithiumazid.

6. Rückhalteanordnung nach Anspruch 5, mit einer Kühloberfläche effektiv zum Kühlen der Verbrennungsprodukte der Gaserzeugungszusammensetzung auf weniger als ungefähr 850 °C.

7. Rückhalteanordnung nach Anspruch 1, wobei die Gaserzeugungszusammensetzung im wesentlichen aus Lithiumazid und Eisenoxid (Fe₂O₃) besteht, und wobei das Lithiumazid in einer effektiven Menge vorhanden ist um in Reaktion mit dem Eisenoxid Lithiumnitrid zu erzeugen:
wobei die Rückhalteanordnung ferner Wärmeaustauschmittel in den Gasströmungsmittel aufweist, die effektiv sind, um die Verbrennungsprodukte der Gaserzeugungszusammensetzung auf weniger als ungefähr 850 °C abzukühlen, um Lithiumnitrid-Feststoffe zu erzeugen; und
wobei Filtermittel vorgesehen sind, um die Feststoffe des Lithiumnitrids und andere Feststoffe in den Verbrennungsprodukten einzufangen.

8. Gaserzeugungszusammensetzung zum Aufblasen einer Fahrzeuginsassenrückhaltevorrichtung, die aktive Bestandteile bestehend im wesentlichen aus Lithiumazid und Metalloxidationmittel aufweist, wobei das Metalloxidationsmittel in einer sub-stöchiometrischen Menge von mindestens 15 Mol überschüssigen Lithiumazids vorhanden ist, wobei das Lithiumazid in einer effektiven Menge vorhanden ist, um in Reaktion mit dem Metalloxidationsmittel eine Menge an Lithiumnitrid (Li₃N) zu erzeugen, wodurch im Falle, daß das Metalloxidationsmittel Metalloxide sind, die stöchiometrische Reaktion wird als die vollständige Umwandlung des Lithiums des Lithiumazids in Lithiumoxid definiert wird.

9. Zusammensetzung nach Anspruch 7 oder 8, wobei das Metalloxidationsmittel aus der folgenden Gruppe ausgewählt ist: Oxide oder Sulfide von einem Übergangsmetall, oder Bor, oder Aluminium, oder Silizium oder Mischungen daraus, oder wobei das Metalloxidationsmittel Eisenoxid (Fe₂O₃) ist vorhanden in einer sub-stöchiometrischen Menge von ungefähr 20 - 50 Mol Prozent Überschuß an Lithiumazid.

10. Zusammensetzung nach Anspruch 8, wobei das erwähnte Lithiumazid und ein Metalloxidationsmittel im wesentlichen gemäß der folgenden Gleichung reagieren: ${\text{zLiN}}_{\text{3}} \text{+} {\text{Me}}_{\text{x}} {\text{Y}}_{\text{y}} \text{→} \frac{\text{3} \text{z} \text{-1}}{\text{2}} {\text{N}}_{\text{2}} \text{+} {\text{yLi}}_{\text{2}} \text{Y} \text{+} \frac{\text{z} \text{-2} \text{y}}{\text{3}} {\text{Li}}_{\text{3}} \text{N} \text{+} \text{xMe}$wobei Y entweder Sauerstoff oder Schwefel ist.

11. Zusammensetzung nach Anspruch 10, wobei z gleich annähernd 3 plus 2y ist.

12. Zusammensetzung nach Anspruch 8, wobei Lithiumazid und Eisenoxid (Fe₂O₃) im wesentlichen gemäß der folgenden Gleichung reagieren: $\text{9} {\text{LiN}}_{\text{3}} \text{+} {\text{Fe}}_{\text{2}} {\text{O}}_{\text{3}} \text{→ 13} {\text{N}}_{\text{2}} \text{+ 3} {\text{Li}}_{\text{2}} \text{O} \text{+} {\text{Li}}_{\text{3}} \text{N} \text{+ 2} \text{Fe} \text{.}$

## Revendications

1. Ensemble de retenue d'occupant de véhicule comportant :
un dispositif de retenue d'un occupant de véhicule ;
un boîtier ;
une composition génératrice de gaz à l'intérieur du boîtier ;
un allumeur destiné à allumer la composition génératrice de gaz ; et
des moyens d'écoulement de gaz destinés à diriger un gaz provenant dudit boîtier vers ledit dispositif de retenue d'un occupant de véhicule ;
ladite composition génératrice de gaz comprenant de l'azoture de lithium et un oxydant métallique (MeY), où Y est de l'oxygène ou du soufre,
dans lequel l'oxydant métallique est présent en une quantité sous-stoechiométrique, d'au moins environ 15 moles % de l'azoture de lithium en excès, le rapport de l'azoture de lithium à l'oxydant métallique étant un rapport ayant pour effet de produire du nitrure de lithium (Li₃N), grâce à quoi, dans le cas d'oxydes métalliques, la réaction stoechiométrique est définie comme étant la conversion complète du lithium de l'azoture de lithium en oxyde de lithium.

2. Ensemble de retenue selon la revendication 1, dans lequel la composition génératrice de gaz brûle conformément à l'équation suivante : ${\text{zLiN}}_{\text{3}} \text{+} {\text{Me}}_{\text{x}} {\text{Y}}_{\text{y}} \text{→} \frac{\text{3} \text{z} \text{-1}}{\text{2}} {\text{N}}_{\text{2}} \text{+} {\text{yLi}}_{\text{2}} \text{Y} \text{+} \frac{\text{z} \text{-2} \text{y}}{\text{3}} {\text{Li}}_{\text{3}} \text{N} \text{+} \text{xMe}$dans laquelle Y est de l'oxygène ou du soufre.

3. Ensemble de retenue selon la revendication 2, dans lequel z est égal approximativement à 3 plus 2y.

4. Ensemble de retenue selon la revendication 1, comportant des surfaces de refroidissement ayant pour effet de refroidir les produits de combustion de la composition génératrice de gaz au-dessous du point de fusion du nitrure de lithium, avantageusement au-dessous de 850°C.

5. Ensemble de retenue selon la revendication 1, dans lequel l'oxydant métallique est un oxyde ou un sulfure d'un métal de transition, ou du bore, de l'aluminium ou du silicium, ou des mélanges de ceux-ci, ou, dans lequel ledit oxydant métallique est de l'oxyde de fer (Fe₂O₃) présent en quantité sous-stoechiométrique d'environ 20-50 moles % d'azoture de lithium en excès.

6. Ensemble de retenue selon la revendication 5, ayant une surface de refroidissement ayant pour effet de refroidir les produits de combustion de la composition génératrice de gaz à moins d'environ 850°C.

7. Ensemble de retenue selon la revendication 1, dans lequel ladite composition génératrice de gaz est constituée essentiellement d'azoture de lithium et d'oxyde de fer (Fe₂O₃) et dans lequel l'azoture de lithium est présent en quantité efficace pour produire, en réaction avec l'oxyde de fer, du nitrure de lithium ;
ledit ensemble de retenue comportant en outre
des moyens d'échange de chaleur dans ledit moyen d'écoulement de gaz ayant pour effet de refroidir les produits de combustion de ladite composition génératrice de gaz à moins d'environ 850°C afin de produire des solides de nitrure de lithium ; et
des moyens à filtre destinés à piéger des solides de nitrure de sodium et d'autres solides dans les produits de combustion.

8. Composition génératrice de gaz pour gonfler un dispositif de retenue d'un occupant de véhicule, comprenant des ingrédients actifs constitués essentiellement d'azoture de lithium et d'un oxydant métallique,
dans lequel l'oxydant métallique est présent en quantité sous-stoechiométrique d'au moins environ 15 moles % d'azoture de lithium en excès, dans lequel l'azoture de lithium est présent en quantité efficace pour produire, en réaction avec l'oxydant métallique, une quantité de nitrure de lithium (Li₃N),
grâce à quoi, dans le cas où l'oxydant métallique est formé d'oxydes métalliques, la réaction stoechiométrique est définie comme étant la conversion complète du lithium de l'azoture de lithium en oxyde de lithium.

9. Composition selon la revendication 7 ou 8, dans laquelle ledit oxydant métallique est choisi dans le groupe constitué d'oxydes ou de sulfures d'un métal de transition, de bore, d'aluminium, de silicium ou de mélanges de ceux-ci, ou bien dans laquelle ledit oxydant métallique est de l'oxyde de fer (Fe₂O₃) présent en quantité sous-stoechiométrique d'environ 20-50 moles % d'azoture de lithium en excès.

10. Composition selon la revendication 8, dans laquelle ledit azoture de lithium et un oxydant métallique réagissent essentiellement conformément à l'équation : ${\text{zLiN}}_{\text{3}} \text{+} {\text{Me}}_{\text{x}} {\text{Y}}_{\text{y}} \text{→} \frac{\text{3} \text{z} \text{-1}}{\text{2}} {\text{N}}_{\text{2}} \text{+} {\text{yLi}}_{\text{2}} \text{Y} \text{+} \frac{\text{z} \text{-2} \text{y}}{\text{3}} {\text{Li}}_{\text{3}} \text{N} \text{+} \text{xMe}$dans laquelle Y est de l'oxygène ou du soufre.

11. Composition selon la revendication 10, dans laquelle z est égal approximativement à 3 plus 2y.

12. Composition selon la revendication 8, dans laquelle ledit azoture de lithium et l'oxyde de fer (Fe₂O₃) réagissent essentiellement conformément à l'équation : $\text{9} {\text{LiN}}_{\text{3}} \text{+} {\text{Fe}}_{\text{2}} {\text{O}}_{\text{3}} \text{→ 13} {\text{N}}_{\text{2}} \text{+ 3} {\text{Li}}_{\text{2}} \text{O} \text{+} {\text{Li}}_{\text{3}} \text{N} \text{+ 2} \text{Fe} \text{.}$
